# EUROPEAN PATENT SPECIFICATION

(11) **EP 1 434 491 B1**
(45) Date of publication and mention of the grant of the patent: **24.02.2010**
(21) Application number: 02800561.9
(22) Date of filing: 13.09.2002
(51) Int. Cl.: A23D 7/00, A23D 7/015, A23D 7/04

(54) **EDIBLE EMULSION SPREAD**
GENIESSBARER EMULSIONSAUFSTRICH
PATE A TARTINER EN EMULSION COMESTIBLE

(30) Priority: 08.10.2001 EP 01203811
(43) Date of publication of application: 07.07.2004
(73) Proprietor: Unilever N.V., 3013 AL Rotterdam (NL); Unilever PLC, London EC4Y 0DY (GB)
(72) Inventor: HUIZINGA, Hindrik, c/o Unilever R & D Vlaardingen, NL-3133 AT Vlaardingen (NL); VAN IMMERSEEL, A.R, c/o Unilever R & D Vlaardingen, NL-3133 AT Vlaarding en (NL); PELAN, Edward, G, c/o Unilever R & D Vlaardingen, NL-3133 AT Vlaardingen (NL)
(74) Representative: Joppe, Hermina Laura Petronella
(86) International application number: PCT/EP2002/010262
(87) International publication number: WO 2003/030648

(56) References cited:
- EP-A- 0 098 663
- EP-A- 0 454 268
- EP-A- 0 584 835
- WO-A-2004/068959
- US-A- 4 591 507
- US-A- 4 716 047
- US-A- 5 904 949

## Description

The present invention deals with an edible fat-continuous emulsion spread which does not need partial glycerides for stabilisation.

### BACKGROUND AND PRIOR ART

Present manufacturing processes for edible W/O-emulsion spreads generally use mono- and/or diglycerides (partially esterified glycerol, also denoted as partial glycerides) as emulsifiers. Particularly reduced fat spreads with a high content of dispersed aqueous phase can not be prepared without efficient surfactants such as monoglycerides for obtaining emulsion stability (The Lipid Handbook, first edition, page 227).

Since long partial glycerides and particularly monoglycerides are a very effective and safe emulsifier for food manufacture, but, since they are obtained by a chemical process, partial glycerides are not considered as natural.

ECO-certified food fulfills a need of a fast growing group of consumers. Its ingredients must comply with the officially acknowledged provisions (EU regulations 2092/91) for ECO-food certification. Each ingredient must be natural which means that it has a natural origin, has been obtained by natural processes only and consequently has not been exposed to any chemical treatment whatsoever.

Presently, it is not possible to manufacture a W/O-emulsion spread with a reduced (about 40 wt.%) fat content and an ambient temperature stability of at least one week, which spread may be qualified as ECO or at least as natural.

EP-A-0454268 describes a low fat emulsion with 32wt% of fat and no partial glycerides but with whey protein. However the emulsions are water continuous.

Some butter fat based spreads are qualified as ECO. Butter fat is not refined and generally contains up to 3 wt.% of natural emulsifiers: phospholipids and partial glycerides which have been formed by spontaneous hydrolysis of the butter fat. Therefore a spread when prepared with a dairy ingredient may be stabilized by its natural emulsifier. Generally, for food manufacture fats are used from which any partial glyceride has been effectively removed by refining.
WO 00/16638, WO 93/10665 and US 4882187 describe spread manufacturing processes where no emulsifier needs to be added. A dairy product, particularly butter fat is on the ingredients list. However, none of those references addresses the particular problem of preparing a spread with a reduced fat content.

Some isolated references contain recommendations for the stabilisation of W/O-emulsions which are alleged to be free of added emulsifiers:

JP 2000236810 employs instead of an emulsifier a starch, which, however, is a chemically modified, so non-natural starch. Moreover, the reference lacks information on how to adapt the process to the preparation of spreads with a reduced fat content.

JP 10/295271 deals with the preparation of a margarine which is said to be emulsifier free. However, the ingredients comprise dairy ingredients and the process requires non-natural hydrogenated fats, such as hydrogenated rapeseed oil. Morever the peculiar emulsion stability problems of spreads with a reduced fat content are not addressed.

Also EP 422 712 and EP 422 713 deal with emulsifier free W/O-spreads. Emulsion stability is realised with the help of special equipment including a homogenizer and an additional scraped surface heat exchanger (SSHE), but the production of reduced fat spreads with ambient stability is not exemplified.

Sometimes (EP 420315, US4591507 and EP 584835) native starches are used for thickening the aqueous phase, but always accompagnied by a partial glyceride which is believed to be responsible for emulsion stability. Apparently, starches when used on their own are not able to stabilize the emulsion.

The present invention deals with the preparation of a spread with a reduced fat content which possesses ambient temperature stability in the absence of partial glycerides.

### SUMMARY OF THE INVENTION

We have found a method for manufacturing an edible reduced fat spread which possesses ambient temperature stability in the absence of partial glycerides, which method uses for the aqueous phase preparation specific thickeners and a specific process.

The present invention comprises a W/O-emulsion spread according to claim 1. The spread is considered to possess ambient temperature stability according to claim 1 when it passes with a score being 1 or 2. at least test c. of the assessment procedure which forms part of this specification. It means that the spread remains stable for at least seven days at an ambient temperature of 15°C and even at least ten weeks at 5°C.

The invention also comprises a manufacturing process for preparing the claimed reduced fat spread.

### DETAILS OF THE INVENTION

The present invention makes use of thickening agents (also denoted as thickeners) which are characterized by their functionality to increase the viscosity of an aqueous phase which is used in the preparation of a food composition.

An aqueous phase in which a sufficient, but relatively small amount of a thickener has been dispersed at elevated temperature becomes a thick, but pourable liquid when cooled down to ambient temperature.
Some thickeners, however, when dispersed in relatively high concentrations in a heated aqueous phase, cause the aqueous phase to become gelled when the aqueous phase cools down to ambient temperature. Such thickeners are called gelling agents, but they make gels only when applied beyond their critical concentration. When used below that concentration only a viscous liquid results. A gel is characterized in that it no longer behaves as a liquid. It retains the form of the container in which it has been formed even when it is removed from that container.

Thickening agents exist in an abundant variety. Some form gels when used at elevated concentrations, others only increase viscosity, even when used in high concentrations. In the context of the present patent a thickening agent refers to a substance increasing the viscosity of the aqueous phase in which it has been dispersed, but always for so far applied in a concentration that no gellation of the aqueous phase occurs at temperatures above 15°C.

In the context of the present invention ambient temperatures are found in the range of 15°C and upwards. It is obvious that extremely high ambient temperatures (30°C and more) adversely affect the emulsion stability of any spread, including the spread of the present invention. Stability at ambient temperature is meant to denote the property that no storage temperatures below 15°C are necessary to maintain emulsion stability.

We have found that an ambient temperature stable reduced fat spread can be made with an aqueous phase which contains a thickener having a specific viscosity profile. Those thickeners are selected from a large group of substances known as such and comprising starches, pectin, cellulose and cellulose derivatives, xanthan, carrageenan, galactomannans and proteins. Several of them qualify as natural. Their special influence on spread stability is caused by a specific preparation of the aqueous phase containing such thickener. has been prepared by a specific process.

Of those thickeners natural starches and modified starches are well known ingredients for food preparation. Starches are denoted as natural when they have not been subjected to any modification treatment other than an exposure to heat, an acid or a bleaching agent. The manufacturing processes of emulsion spreads usually employ modified, non-natural starches. When natural starches are present, without exception these starches are used without special aqueous phase treatment and together with the addition of partial glyceride, otherwise no stable emulsion results.

The present invention uses thickeners, particularly natural starches for imparting emulsion stability. The presence of partial glycerides is not necessary. We have found which natural thickeners qualify for that use and which processing is needed for the preparation of a proper aqueous phase containing such thickeners.

Since partial glycerides are redundant, the invention allows the preparation of a stable ECO-grade spread with an ECO-qualified thickener, particularly with a native starch, a preferred thickener of the present invention.

The starches and other thickeners which qualify for use in the present invention are characterized by a peak value in the Brabender viscosity graph of its aqueous dispersion. For the dispersion used in the viscosity mesurement such thickener concentration must be used that for the dispersion with that concentration a peak viscosity is measured which is at least 70 BU. Preferably, the end viscosity of the same aqueous dispersion is at least 60 BU. The viscosity graph is measured according to the Brabender Viscograph protocol, where viscosities and protocol are as defined elsewhere in this specification.

For preparing an aqueous phase which is suitable for a spread according to the invention, the thickener is used in at least the same concentration as used for giving the Brabender measurement dispersion the claimed minimum peak viscosity. The thickener concentration may be increased beyond that value but without exceeding the critical concentration which changes the thickener into a gelling agent.

A common feature of many starch thickeners which qualify for the invention is their low amylose content. These starches are unable to form a gel, at least when used in the concentrations applied for the present aqueous phase. These starches are preferably natural starches, particularly native starches. In the context of this specification a starch is considered natural when it has not been subjected to any modification treatment other than an exposure to heat, an acid or a bleaching agent. Preferred native starches are potato starch, tapioca starch and waxy maize starch.

Xanthan, pectin and certain proteins are examples of non-starch thickening agents which are natural and which impart to a properly prepared reduced fat spread the desired emulsion stability. Thickeners as e.g. rice starch and waxy rice starch, although widely used in spread preparation, have appeared to be unsuited for use in the present invention. The co-presence of partial glycerides is always required for emulsion stability.

Thickeners which qualify may be used in any combination and in any suitable ratio for spread preparation, provided the combination possesses the claimed critical viscosity values.

Surprisingly, the spreads of the present invention in the absence of partial glycerides remain stable for at least seven days at an ambient temperature of 15°C and, depending on the spread's composition, even for six weeks at 25°C. Preferably, the spread is prepared with solely natural ingredients. However, non-natural ingredients may be included as well.

The spread according to the present invention does not contain a substantial amount of added partial glyceride. Since for emulsion stability present a spread must contain at least 0.1 wt.%, anyway at least 0.05 wt.% of partial glycerides, the content of partial glycerides in a spread according to the present invention is 0 - 0.1 wt.%, preferably 0 - 0.05 wt.%. These ranges cover small amounts of natural partial glycerides formed by fat hydrolisation. Such concentrations are not high enough for producing an ambient stable low fat spread.

An additional benefit of the invention is that expensive thickeners, such as gelatin and modified starches as used in current aqueous phase compositions, can be substituted by a much cheaper thickener, particularly a native starch, provided, of course, the aqueous phase is prepared according to the present invention.
For reasons of convenience the aqueous phase may be prepared with a pre-gelatinised starch which is a starch prepared from one of the starches as specified hereinbefore and which dispersed in an aqueous phase has been subjected to the heat treatment as described for the claimed process, but which thereafter has been dried e.g by spray drying. Such pre-gelatinised starch only needs to be dissolved with the other ingredients in the aqueous phase, without subsequent heating of the aqueous phase up to the peak temperature.

Without wishing to be bound by theory we believe that the starch thickener selected and processed according to the present invention exists in the aqueous phase for 90 - 100 wt.% in the form of particles swollen by water absorption and for 0 - 10 wt.% as disintegrated starch particles.
The swollen starch particles disintegrate in the course of subsequent spread processing, but some survive and in the final product can be identified by microscopy.

Manufacturing processes for obtaining low fat spreads starting with a fat phase and the present aqueous phase are well known to the man skilled in the art. These can be found with all details in various textbooks such as K.A. Alexandersen, Margarine Processing Plants and Equipment (Vol.4, Bailey's Industrial Oil and Fat Products, Wiley and Sons Inc., New York 1996).

The Brabender Viscograph is the well known device for measuring temperature dependent viscosity behaviour of dispersed starches and other thickeners. The standard protocol for establishing the Brabender viscograph of a dispersion of starch or another thickening agent is specified elsewhere in this patent. From the resulting viscograph the previously mentioned peak viscosity can be read, as well as the end viscosity which is the viscosity of the thickener dispersion when cooled down to 30°C at the end of the viscosity measurement.

Viscosities of thickener dispersions are concentration dependent. The viscograph of starches is established for an aqueous dispersion with a 3.3 wt.% starch content. The claimed viscosities at the peak temperature and the end temperature relate to starch dispersions with that concentration.

When the viscograph of a non-starch thickener has to be established, first a few concentrations should be tried to see whether for the dispersion a viscograph can be established which shows a maximum when the heating proceeds according to the protocol. The minimum concentration for use of that thickener in the process for the spread preparation is the lowest concentration for which in the viscosity measurement a peak viscosity of 70 BU is realized. Preferred thickeners moreover have an end viscosity of at least 60 BU at the same concentration. When the critical peak viscosity can not be attained by adapting the thickener concentration, that thickener does not qualify for use in the invention.
For starch the minimum concentration has appeared to be about 2 wt.%, for xanthan about 0.5 wt.%, for pectin about 0.7 wt.% and for protein about 3.5 wt.%. Although the end viscosity value is not critical for obtaining a good spread, it has appeared that low-fat emulsions prepared with a thickener having a >60 BU end viscosity withstand clearly better high ambient temperatures, of course in the absence, of partial glycerides.

Generally, the manufacture of the invented reduced fat spreads starts with preparing a pre-emulsion which either is fat continuous or water continuous. In the latter case the processing steps include an inversion of the initial O/W-emulsion into the desired W/O-emulsion. Processing conditions for such inversion are known from the prior art. The inversion option, starting with an O/W-emulsion, is recommended when the end viscosity of the aqueous phase is higher than 90 BU and even essential when the end viscosity is higher than 100 BU.
The processes of the invention are as defined in the claims.

The terms premix and pre-emulsion are used interchangeably and refer to the crude emulsion, also denoted as dispersion, resulting from the initial mixing of the aqueous phase with the fat phase.

The aqueous phase is prepared by first mixing all aqueous phase ingredients including the selected thickener. Then the aqueous phase is heated up to the temperature of the thickener's peak viscosity (further denoted as "peak temperature"). When starch is the thickening agent, heating beyond the peak temperature causes disintegration of the swollen starch particles. Therefore, heating the aqueous phase is stopped, preferably, a few degrees centigrade below the peak temperature. Then the thickened aqueous phase is mixed with the fat phase. In case of a relatively high peak temperature the aqueous phase, before mixing, is cooled down to a suitable mixing temperature, e.g. 60°C. The obtained pre-mix is subjected to the cooling and working treatments which are usual for spread preparation. The starch which is chosen for the invention may be a so-called pregelatinized starch. The treatment of the aqueous phase containing such starch remains the same as for ordinary starch described before.

Optionally, the preparation of a separate pre-mix is substituted by directly proportioning both prepared phases from their storage tanks into the first scraped surface heat exchanger (Votator A-unit).

The concentration of the thickener in the aqueous phase is at least the dispersion concentration necessary for attaining the critical peak viscosity value mentioned in the Brabender protocol. This concentration, however, should never exceed a concentration which causes the thickened phase to gel at temperatures above 15°C.

Suitable concentrations for some common thickeners are found in the following ranges, for starches: 2-6 wt.%, for xanthan 0.5-1.0 wt.%, for pectin 0.4-1 wt.%, for protein 3.5-10 wt.%.

Table I shows properties of an aqueous dispersion of various thickeners.

**TABLE I**

| Type of Starch | Conc.aq. dispersion | Peak Viscosity | Peak Temperature | End Viscosity | Qualify ? (*) |
|---|---|---|---|---|---|
| | [wt.%] | [BU} | [°C] | [BU] | |
| Potato starch | 3.3 | 91 | 92 | 163 | Y |
| Waxy maize starch | 3.3 | 106 | 83 | 60 | Y |
| Tapioca starch | 3.3 | 76 | 79 | 95 | Y |
| Heat treated potato starch | 3.3 | 128 | 95 | 200 | Y |
| Rice starch | 3.3 | 29 | 90 | 46 | N |
| Waxy rice starch | 3.3 | 13 | 82 | 23 | N |
| Xanthan | 0.5 | 72 | 40.8 | 82 | Y |
| Pectin | 0.7 | 172 | 40.4 | 158 | Y |
| Dairy protein | 3.5 | 73 | 42.6 | 0 | Y |

| | | | | | |
|---|---|---|---|---|---|
| (*)Qualify for use (Y/N) in an aqueous phase for spread preparation. | | | | | |

Equipment, ingredients and conditions employed for carrying out the process of the invention (as far as not specified hereinbefore) are those common in spread manufacturing.

The spread according to the present invention comprises 25 - 60%, preferably 25 - 40 wt.% of a fat continuous phase. The fat of the fat phase comprises triglycerides selected from vegetable or animal sources. Such vegetable triglycerides include soybean oil, sunflower oil, palm oil, palm kernel oil, both high and low erucic rapeseed oil, coconut oil, olive oil, sesame oil, peanut oil, corn oil and mixtures thereof. Triglycerides from animal sources include fish oil, tallow and dairy fat. The fat phase usually consist of a mixture of oils and fats. Note that throughout this specification the terms oil and fat are used interchangeably. A fat which is liquid at ambient temperature usually is denoted with oil.

Usually a structuring fat, e.g. hydrogenated palm oil, forms part of the fat phase composition. Such fat may have been subjected to chemical and/or physical modification such as blending, hydrogenation, fractionation and/or interesterification.
Preferably, the fat contained in the present spreads consists of triglycerides from a vegetable source. Preferably, the fat qualifies as natural.

Generally, the composition of the fat in the fat phase is not critical. For organoleptic reasons, it is preferred to employ a fat that has a solid fat content at 35°C of less than 5 wt.% (calculate on the weight of the fat), more preferably less than 3 wt.%. For good spreading the solid fat content at 20°C is suitably between 5 and 30 wit.%, preferably between 5 and 20 wt.%. At 5°C the solid fat content suitably is between 5 and 50 wt.%, preferably between 10 and 40 wt.%.
The solid fat content (N-value) indicates the amount of fat present in the solid state and is expressed as a weight percentage on total fat. The N-value can be determined conveniently by the method as described in Fette, Seifen, Anstrichmittel, 80 (1978), 180-186.

Specifically, the composition of the fat depends on the desired consistency of the final product which is either a stick, a hard tub or a soft tub spread.

Optional spread ingredients are flavouring agents, lactose, salt, preservatives, acidifiers, vitamins, and colouring agents. The compositions may comprise dairy ingredients, such as proteins, which can be derived from any dairy source.

The spread is given a pH in the range 3 to 10, preferably 3.5 to 5.5, with a suitable acidifier such as lactic acid or citric acid.

Optimum organoleptic characteristics (quick oral breakdown of emulsion, absence of waxy mouthfeel) are obtained when the fat phase completely melts in the range 20°-45°C, more preferably 30°-37°C.

For cooling and working the premix is conducted according to prior art methods through a sequence of scraped surface heat exchangers (A-units) and at least one pin stirrer (C-unit).
Preferably the premix is conducted through an A1-A2-A3-C sequence of three scraped surface heat exchangers and a pin stirrer. For the non-inversion process suitable exit temperatures after the A-units (shaft speeds 800 rpm) are successively: (ex A1) 25 ± 2°C, (ex A2) 18 ± 2°C, (ex A3) 9 ± 2°C. A suitable small scale pin stirrer has a volume of 3 liters, the stirrer speed being in the range of 150 - 600 rpm and typically is 250 rpm.
For the inversion process suitable exit temperatures after the A-units (shaft speeds 800 rpm) are successively: (ex A1) 20 ± 2°C, (ex A2) 12 ± 2°C, (ex A3) 7 ± 2°C. The pin stirrer, where the inversion step takes place, is a high speed pin stirrer, preferably with a shaft speed of about 800 rpm.

### Brabender Viscograph Protocol

The Brabender Viscograph is a common device for viscosity measurements usually of starch dispersions, which use has been a de facto standard in the starch industry for more than half a century. For deciding whether a thickener qualifies for use in the invented spread preparation a Brabender "viscograph" of an aqueous dispersion has to be established. The viscograph is a graph of viscosity values plotted against temperature.

For establishing the viscograph e.g. of a starch, the device measures the viscosity of a slurry prepared by dispersing in water 15 g of a starch (or another thickening agent) up to a total volume of 450 ml. The spindle of the Viscograph, rotating at a speed of 75 rpm, should be fully covered with the starch slurry. While the temperature of the slurry is raised gradually, its viscosity is continuously monitored, measured and measured. The temperature variation follows a heating regime mentioned below. The viscograph consists of a graph of the measured viscosities, expressed as Brabender units, and plotted against the slurry temperature.

The heating regime of the viscograph measuring protocol comprises heating a slurry from 45°C up to 90°C at a constant rate of 1.5°C/minute, maintaining the temperature at 90°C for 15 minutes, cooling the slurry down to 30°C at a rate of 1.5°C/minute and maintaining the temperature at 30°C during a further 15 minutes.

The viscograph of a suited thickener dispersion shows a maximum viscosity, to be denoted as the "peak viscosity". The temperature at which the peak viscosity is attained is denoted as the "peak temperature" or, for a starch thickener, the "gelatinisation temperature". The viscosity value measured at the end of the protocol (30°C) is the so called "end viscosity". The measured peak viscosity value should exceed the claimed value for qualifying the thickener for use in a suitable aqueous phase. The kind of thickener and its found peak temperature are important parameters in the preparation of the aqueous phase.

### Assessment of Emulsion Stability

Emulsion stability is assessed by an assay which is commonly used for establishing spread stability and which consists of vigorous spreading product samples on thick paper. The samples a., b. and c. are collected after storage of the spread samples for
a. 1 week at 5°C,
b. 10 weeks at 5°C,
c. 1 week at 15°C, then storage for 2 days at 25°C and finally, storage for 1 day at 10°C (temperature cycling).

The assay uses the following scores:
1: excellent spreading: no softening during spreading
2: good spreading: products may be softer after spreading
3: moderate spreading: products shows visible oil or water droplets after spreading
4: unacceptable spreading: products shows large water or oil droplets
5: product is completely destroyed

Spreads are considered ambient stable according to claim 1 when they pass at least test c. with a score being 1 or 2.

The invention is illustrate by the following examples.

All percentages in this specification are weight percentages unless indicated otherwise.

### EXAMPLES 1 - 6

### Spread preparation using non-inversion process

The composition of the phases, the critical viscosity value of the thickener and the scores of the stability assessment are summarized in Table II.

For cooling and working the pre-emulsion of both phases is conducted through an A1-A2-A3-C sequence of three scraped surface heat exchangers and a pin stirrer. Suitable exit temperatures after the A-units (shaft speeds 800 rpm) are successively: (ex A1) 25 ± 2°C, (ex A2) 18 ± 2°C, (ex A3) 9 ± 2°C. The pin stirrer has a volume of 3 liters and a stirrer speed of 250 rpm.

**TABLE II**

| EXAMPLE | 1 | 2 | 3 | 4 | 5 | 6 |
|---|---|---|---|---|---|---|
| **Fat phase** | % | % | % | % | % | % |
| Fat | 60.00 | 40.00 | 40.00 | 40.00 | 40.00 | 40.00 |
| Lecithin | 0.24 | 0.24 | 0.24 | 0.24 | 0.24 | 0.24 |
| Natural colour agent | 0.10 | 0.10 | 0.10 | 0.10 | 0.10 | 0.10 |
| **Aqueous phase** | | | | | | |
| Water | 37.26 | 57.26 | 56.76 | 55.26 | 55.26 | 55.26 |
| Maize starch | | | | | 1.05 | |
| Waxy maize starch | 1.00 | 1.00 | 1.50 | 3.00 | 1.95 | |
| Potato starch | | | | | | 3.00 |
| Skimmed milk powder | 0.40 | 0.40 | 0.40 | 0.40 | 0.40 | 0.40 |
| Salt | 1.00 | 1.00 | 1.00 | 1.00 | 1.00 | 1.00 |
| | | | | | | |
| W/O processing succesful ? | yes | no | no | yes | yes | no |
| | | | | | | |
| Spread.test a. | 1 | | | 1 | 1 | |
| Spread.test b. | 1 | | | 1 | 2 | |
| Spread.test c. | 1 | | | 1 | 1 | |
| | | | | | | |

| Viscosity (Brabender Units) | | | | | | |
|---|---|---|---|---|---|---|
| Peak viscosity (aim >70) | 100 | 60 | 95 | 140 | 105 | 135 |
| End viscosity (aim pref. >60) | 60 | 25 | 55 | 100 | 95 | 265 |

Only samples 1, 4 and 5 could be obtained with the non-inversion process as described above. When trying the process for samples 2, 3 and 6, the oil-continuous pre-mix reverted into a water-continuous premix a few minutes after preparing the premix.
The same thickening agents have been succesfully employed in examples 9-12.
Samples 1, 4 and 5 were temperature stable according to the spreading tests a., b. and c.: no visible oil or water exudation. The spreads remained stable even when exposed to the temperature cycling test c.

### EXAMPLES 7 - 17

### Spread preparation using inversion process

The composition of the phases, the critical viscosity value of the thickener and the scores of the stability assessment are summarized in Tables IIIa and IIIb.

For cooling and working the pre-emulsion of the phases is conducted through an A1-A2-A3-C sequence of three scraped surface heat exchangers and a pin stirrer.
Suitable exit temperatures after the A-units (shaft speeds 800 rpm) are successively: (ex A1) 20 ± 2°C, (ex A2) 12 ± 2°C, (ex A3) 7 ± 2°C. The high speed pin stirrer, where the inversion step takes place, has a shaft speed of about 800 rpm.

All samples were succesfully obtained by the inversion process. Only samples 13 and 14 failed to pass the spreading tests, as could be expected from the inadequate BU-values of the used rice starch thickener.

**TABLE IIIa**

| **EXAMPLE** | 7 | 8 | 9 | 10 | 11 | 12 |
|---|---|---|---|---|---|---|
| **Fat phase** | % | % | % | % | % | % |
| Fat | 40 | 40 | 40 | 40 | 34 | 40 |
| Lecithin | 0.24 | 0.24 | 0.24 | 0.24 | 0.24 | 0.24 |
| Natural colour agent | 0.10 | 0.10 | 0.10 | 0.10 | 0.10 | 0.10 |
| **Aqueous phase** | | | | | | |
| Water | 56.3 | 55.3 | 56.3 | 55.3 | 61.7 | 56.3 |
| Tapioca starch | 2.00 | 3.00 | | | | |
| Potato starch | | | 2.00 | 3.00 | 4.00 | |
| Waxy maize starch | | | | | | 2.00 |
| Skimmed milk powder | 0.40 | 0.40 | 0.40 | 0.40 | | 0.40 |
| Salt | 1.00 | 1.00 | 1.00 | 1.00 | | 1.00 |
| | | | | | | |
| Inversion process ? | yes | yes | yes | yes | yes | yes |
| | | | | | | |
| Spread. test a. | 1 | 2 | 1 | 1 | 1 | 1 |
| Spread. test b. | 1 | 2 | 1 | 1 | 2 | 1 |
| Spread. test c. | 1 | 2 | 1 | 1 | 1 | 1 |
| | | | | | | |

| Viscosity (Brabender Units) | | | | | | |
|---|---|---|---|---|---|---|
| Peak viscosity (aim >70) | 72 | 115 | 120 | 135 | 220 | 105 |
| End viscosity (aim pref. >60) | 105 | 130 | 240 | 265 | 325 | 70 |

Sample 11, having the lowest fat content, was subjected to an extra severe temperature treatment. Even when stored for six weeks at 30°C, this "stability-sensitive" sample nevertheless remained stable and did not show oil or water exudation.

**TABLE IIIb**

| **EXAMPLE** | 13 | 14 | 15 | 16 | 17 |
|---|---|---|---|---|---|
| **Fat phase** | % | % | % | % | % |
| Fat | 40 | 40 | 38 | 38 | 38 |
| Lecithin | 0.24 | 0.24 | 0.24 | 0.24 | 0.24 |
| Natural colour agent | 0.10 | 0.10 | 0.10 | 0.10 | 0.10 |
| **Aqueous phase** | | | | | |
| Water | 55.3 | 55.3 | 60.6 | 60.4 | 51.1 |
| Rice starch | 3.00 | | | | |
| Waxy rice starch | | 3.00 | | | |
| Xanthan | | | 0.56 | | |
| Pectin (Vidochrem D) | | | | 0.7 | |
| Skimmed milk powder (contains 35% dairy protein) | 0.40 | 0.40 | | | 10.0 |
| Salt | 1.00 | 1.00 | 0.56 | 0.56 | 0.56 |
| | | | | | |
| Inversion process ? | yes | yes | yes | yes | yes |
| | | | | | |
| Spread. test a. | 4 | 3 | 1 | 1 | 1 |
| Spread. test b. | 5 | 5 | 1 | 1 | 1 |
| Spread. test c. | 4 | 5 | 2 | 2 | 2 |
| | | | | | |
| Viscosity (Brabender Units) | | | | | |
| Peak viscosity (aim >70) | 55 | 25 | 72 | 172 | 73 |
| End viscosity (aim pref. >60) | 70 | 65 | 82 | 158 | 0 |

Samples 15-17 refer to non-starch thickeners. With xanthan and pectin stable emulsions were obtained. Sample 17 showed storage stability which is good at 5°C, but less at ambient temperature. The dairy protein thickener has a good peak viscosity, but an inadequate end viscosity.

## Claims

1. Edible fat continuous W/O-emulsion spread which is stable at ambient temperature, in which spread partial glycerides are either absent or when present are an added ingredient resulting in a total concentration not exceeding 0.1 wt.% on spread, which spread consists of 25 - 60 wt.%, preferably 25 - 40 wt.% on product of a continuous triglyceride fat phase and a dispersed aqueous phase which contains at least X wt.% on aqueous phase of a natural thickening agent which is
**characterized by** a peak value in the viscosity graph of its aqueous dispersion and where the thickener concentration X is chosen such that an aqueous dispersion of the thickener with that concentration has a peak viscosity which is at least 70 BU, where the viscosity graph is established according to the Brabender Viscograph protocol and where viscosities and protocol are as defined elsewhere in this specification.

2. Spread according to claim 1, **characterized in that** the total concentration of partial glycerides does not exceed 0.05 wt.%.

3. Spread according to claims 1 or 2, **characterized in that** the thickening agent is a native starch.

4. Spread according to claim 3, **characterized in that** the starch is chosen from the group consisting of potato starch, tapioca starch, maize starch and waxy maize starch.

5. Spread according to claims 1 or 2, **characterized in that** the thickener is chosen from the group consisting of pectin, cellulose and cellulose derivatives, xanthan, carrageenan and galactomannans.

6. Spread according to claims 1 or 2, **characterized in that** the thickener is a protein, preferably a dairy protein or soy protein.

7. Spread according to claims 1 or 2, **characterized in that** the thickener when measured in an aqueous dispersion with concentration X has an end viscosity which is at least 60 BU and where the viscosity graph is established according to the Brabender Viscograph protocol and where viscosities and protocol are as defined elsewhere in this specification.

8. Spread according to claims 1 or 2, **characterized in that** the spread contains only natural ingredients and is obtained by natural processing.

9. Spread according to claims 1 or 2, **characterized in that** the spread passes with a score of 1 or 2 the emulsion stability assay as described in the specification.

10. Spread according to anyone of the previous claims, **characterized in that** no substantial amount of partial glyceride is present.

11. Process for the manufacture of an edible W/O-spread according to anyone of the preceding claims which comprises the steps:
a. preparing an aqueous phase with the usual aqueous phase ingredients and a fat phase with the usual fat phase ingredients,
b. mixing such amounts of aqueous phase and fat phase that a pre-emulsion results which contains 25 - 60 wt.%, preferably 25 - 40 wt.% of continuous fat phase,
c. subjecting the obtained emulsion to usual cooling and working treatments resulting in a plastic W/O-emulsion spread,
**characterized in that** the aqueous phase composition includes a thickener of which the type and concentration are as defined in anyone of the preceding claims and **in that** the aqueous phase before mixing with the fat phase is heated up to the temperature of the thickener's peak viscosity and then is mixed with the fat phase.

12. Process for the manufacture of an edible W/O-spread according to anyone of claims 1 - 10, which comprises the steps:
a. preparing an aqueous phase with the usual aqueous phase ingredients and a fat phase with the usual fat phase ingredients,
b. mixing such amounts of aqueous phase and fat phase that a pre-emulsion results which contains 25 - 60 wt.%, preferably 25 - 40 wt.% of dispersed fat phase,
c. subjecting the obtained emulsion to usual cooling and working treatments resulting in inverting the pre-emulsion prepared in step b. and finally in a plastic W/O-emulsion spread,
**characterized in that** the aqueous phase composition includes a thickener of which the type and concentration are as defined in claims 1 - 10 and **in that** the aqueous phase before mixing with the fat phase is heated up to the temperature of the thickener's peak viscosity and then is mixed with the fat phase.

13. Process according to claims 11 or 12, **characterized in that** the thickener is a starch, preferably a pregelatinized starch.

14. Process according to claim 13, **characterized in that** the thickening agent is a native starch.

15. Process according to claim 13, **characterized in that** the starch is chosen from the group consisting of potato starch, tapioca starch, maize starch and waxy maize starch.

16. Process according to claims 11 or 12, **characterized in that** the thickener is chosen from the group consisting of pectin, cellulose and cellulose derivatives, xanthan, carrageenan and galactomannans.

17. Process according to claims 11 or 12, **characterized in that** the thickener is a protein, preferably a dairy protein or soy protein.

18. Process according to claims 11 or 12, **characterized in that** the content of partial glycerides in the pre-emulsion is 0 - 0.1 wt.%, preferably 0 - 0.05 wt.%.

19. Process according to the previous claim **characterized in that** no substantial amount of partial glyceride is present in the pre-emulsion.

20. Process according to anyone of claims 11 - 17 and 19, **characterized in that** solely ingredients are used which are qualified as natural.

## Patentansprüche

1. Essbarer W/Ö-Emulsions-Aufstrich mit kontinuierlicher Fettphase, der bei Umgebungstemperatur stabil ist, wobei in dem Aufstrich partielle Glyceride entweder nicht vorhanden sind oder, wenn sie vorhanden sind, ein zugesetztes Ingrediens sind, was in einer Gesamtkonzentration, die 0,1 Gewichts-%, bezogen auf den Aufstrich, nicht übersteigt, resultiert, wobei der Aufstrich zu 25 - 60 Gewichts-%, vorzugsweise 25 - 40 Gewichts-%, bezogen auf das Produkt, aus einer kontinuierlichen Triglyceridfettphase und einer dispergierten wässrigen Phase besteht, welche wenigstens X Gewichts-%, bezogen auf die wässrige Phase, eines natürlichen Verdickungsmittels enthält, welches durch einen Peak-Wert im Viskositätsgraphen seiner wässrigen Dispersion **gekennzeichnet** ist und worin die Verdickungsmitteikonzentration X so gewählt ist, dass eine wässrige Dispersion des Verdickungsmittels mit jener Konzentration eine Peak-Viskosität hat, die wenigstens 70 BU ist, wobei der Viskositätsgraph entsprechend dem Protokoll des Brabender-Viskographen verstellt wird und wobei Viskositäten und Protokoll wie an anderer Stelle in dieser Beschreibung definiert sind.

2. Aufstrich gemäß Anspruch 1, **dadurch gekennzeichnet, dass** die Gesamtkonzentration an partiellen Glyceriden 0,05 Gewichts-% nicht übersteigt.

3. Aufstrich gemäß Anspruch 1 oder 2, durch **gekennzeichnet**, dass das Verdickungsmittel eine native Stärke ist.

4. Aufstrich gemäß Anspruch 3, **dadurch gekennzeichnet, dass** die Stärke aus der Gruppe, bestehend aus Kartoffelstärke, Tapiokastärke, Maisstärke und Wachsmaisstärke, ausgewählt ist.

5. Aufstrich gemäß Anspruch 1 oder 2, **dadurch gekennzeichnet, dass** das Verdickungsmittel aus der Gruppe, bestehend aus Pektin, Cellulose und Cellulosederivaten, Xanthan, Carrageenan und Galactomannanen, ausgewählt ist.

6. Aufstrich gemäß Anspruch 1 oder 2, **dadurch gekennzeichnet, dass** das Verdickungsmittel ein Protein, vorzugsweise ein Milchprotein oder Sojaprotein, ist.

7. Aufstrich gemäß Anspruch 1 oder 2, **dadurch gekennzeichnet, dass** das Verdickungsmittel, wenn es in einer wässrigen Dispersion mit Konzentration X gemessen wird, eine Endviskosität hat, die wenigstens 60 BU ist, und wobei der Viskositätsgraph entsprechend dem Protokoll des Brabender-Viskographen erstellt ist und wobei Viskositäten und Protokoll wie an anderer Stelle in dieser Beschreibung definiert sind.

8. Aufstrich gemäß Anspruch 1 oder 2, **dadurch gekennzeichnet, dass** der Aufstrich nur natürliche Ingredienzien enthält und durch natürliche Verarbeitung erhalten wird.

9. Aufstrich gemäß Anspruch 1 oder 2, **dadurch gekennzeichnet, dass** der Aufstrich mit einer Bewertung von 1 oder 2 den Emulsionsstabilitäts-Assay, wie er in der Beschreibung beschrieben wird, besteht.

10. Aufstrich gemäß einem der vorangehenden Ansprüche, **dadurch gekennzeichnet, dass** keine wesentliche Menge an partiellem Glycerid vorhanden ist.

11. Verfahren zur Herstellung eines essbaren W/Ö-Aufstrichs gemäß einem der vorangehenden Ansprüche, das die folgenden Schritte umfasst:
a. Herstellen einer wässrigen Phase mit den üblichen wässrige Phase-Ingredienzien und einer Fettphase mit den üblichen Fettphase-Ingredienzien,
b. Mischen solcher Mengen an wässriger Phase und Fettphase, dass eine Voremulsion resultiert, welche 25 - 60 Gewichts-%, vorzugsweise 25 - 40 Gewichts-%, kontinuierliche Fettphase enthält,
c. Unterwerfen der erhaltenen Emulsion üblichen Kühlungs- und Verarbeitungsbehandlungen, was in einem plastischen W/Ö-Emulsions-Aufstrich resultiert,
**dadurch gekennzeichnet, dass** die wässrige Phase-Zusammensetzung ein Verdickungsmittel umfasst, dessen Typ und Konzentration in einem der vorangehenden Ansprüche definiert sind, und **dadurch**, dass die wässrige Phase vor einem Mischen mit der Fettphase bis zu der Temperatur der Peak-Viskosität des Verdickungsmittels erwärmt wird und dann mit der Fettphase vermischt wird.

12. Verfahren zur Herstellung eines essbaren W/Ö-Aufstrichs gemäß einem der Ansprüche 1 - 10, das die folgenden Schritte umfasst:
a. Herstellen einer wässrigen Phase mit den üblichen wässrige Phase-Ingredienzien und einer Fettphase mit den üblichen Fettphase-Ingredienzien,
b. Mischen solcher Mengen an wässriger Phase und Fettphase, dass eine Voremulsion resultiert, die 25 - 60 Gewichts-%, vorzugsweise 25 - 40 Gewichts-%, dispergierte Fettphase enthält,
c. Unterwerfen der erhaltenen Emulsion üblichen Kühlungs- und Verarbeitungsbehandlungen, was in einer Umkehrung der Voremulsion, die in Schritt b. hergestellt wurde, und schließlich in einem plastischen W/Ö-Emulsions-Aufstrich resultiert,
**dadurch gekennzeichnet, dass** die wässrige Phase-Zusammensetzung ein Verdickungsmittel umfasst, dessen Typ und Konzentration wie in den Ansprüchen 1 - 10 definiert sind, und **dadurch**, dass die wässrige Phase vor Mischen mit der Fettphase bis zu der Temperatur der Peak-Viskosität des Verdickungsmittels erwärmt wird und dann mit der Fettphase gemischt wird.

13. Verfahren gemäß Anspruch 11 oder 12, **dadurch gekennzeichnet, dass** das Verdickungsmittel eine Stärke, vorzugsweise eine Quellstärke, ist.

14. Verfahren gemäß Anspruch 13, **dadurch gekennzeichnet, dass** das Verdickungsmittel eine native Stärke ist.

15. Verfahren gemäß Anspruch 13, **dadurch gekennzeichnet, dass** die Stärke aus der Gruppe, bestehend aus Kartoffelstärke, Tapiokastärke, Maisstärke und Wachsmaisstärke, ausgewählt ist.

16. Verfahren gemäß Anspruch 11 oder 12, **dadurch gekennzeichnet, dass** das Verdickungsmittel aus der Gruppe, bestehend aus Pektin, Cellulose und Cellulosederivaten, Xanthan, Carrageenan und Galactomannanen, ausgewählt wird.

17. Verfahren gemäß Anspruch 11 oder 12, **dadurch gekennzeichnet, dass** das Verdickungsmittel ein Protein, vorzugsweise ein Milchprotein oder Sojaprotein, ist.

18. Verfahren gemäß Anspruch 11 oder 12, **dadurch gekennzeichnet, dass** der Gehalt an partiellen Glyceriden in der Voremulsion 0 - 0,1 Gewichts-%, vorzugsweise 0 - 0,05 Gewichts-%, ist.

19. Verfahren gemäß dem vorangehenden Anspruch, **dadurch gekennzeichnet, dass** keine wesentliche Menge an partiellem Glycerid in der Voremulsion vorhanden ist.

20. Verfahren gemäß einem der Ansprüche 11 - 17 und 19, **dadurch gekennzeichnet, dass** lediglich Ingredienzien verwendet werden, die als natürlich qualifiziert sind.

## Revendications

1. Pâte à tartiner en émulsion E/H continue de matière grasse comestible qui est stable à température ambiante, dans laquelle des glycérides partiels sont soit absents, soit, lorsqu'ils sont présents, constituent un ingrédient ajouté dont la concentration totale n'excède pas 0,1 % en poids de la pâte à tartiner, ladite pâte à tartiner étant composée à 25 à 60 % en poids, de préférence de 25 à 40 % en poids d'une phase grasse de triglycéride continue et d'une phase aqueuse dispersée comprenant au moins X % en poids d'un agent épaississant naturel **caractérisé par** une valeur de crête dans le graphique de viscosité de sa dispersion aqueuse, la concentration en épaississant X étant choisie de manière à ce qu'une dispersion aqueuse de l'épaississant avec cette concentration présente une viscosité maximale d'au moins 70 UB, et le graphique de viscosité étant établi selon le protocole de viscographe Brabender et les viscosités et le protocole étant tels que définis dans le présent mémoire.

2. Pâte à tartiner selon la revendication 1,
**caractérisée en ce que** la concentration totale en glycérides partiels n'excède pas 0,05 % en poids.

3. Pâte à tartiner selon les revendications 1 ou 2, **caractérisée en ce que** l'agent épaississant est un amidon natif.

4. Pâte à tartiner selon la revendication 3, **caractérisée en ce que** l'amidon est choisi parmi le groupe composé d'amidon de pomme de terre, d'amidon de tapioca, d'amidon de maïs et d'amidon de maïs cireux.

5. Pâte à tartiner selon les revendications 1 ou 2, **caractérisée en ce que** l'épaississant est choisi parmi le groupe composé de pectine, de cellulose et de dérivés de cellulose, de xanthane, de carraghénane et de galactomannanes.

6. Pâte à tartiner selon les revendications 1 ou 2, **caractérisée en ce que** l'épaississant est une protéine, de préférence une protéine de lait ou une protéine de soja.

7. Pâte à tartiner selon les revendications 1 ou 2, **caractérisée en ce que** l'épaississant, lorsqu'il est mesuré dans une dispersion aqueuse avec une concentration X, présente une viscosité finale d'au moins 60 UB, le graphique de viscosité étant établi selon le protocole de viscographe Brabender et les viscosités et le protocole étant définis dans le présent mémoire.

8. Pâte à tartiner selon les revendications 1 ou 2, **caractérisée en ce que** la pâte à tartiner contient uniquement des ingrédients naturels et est obtenue grâce à un procédé naturel.

9. Pâte à tartiner selon les revendications 1 ou 2, **caractérisée en ce que** la pâte à tartiner obtient une note de 1 ou 2 au test de stabilité d'émulsion décrit dans le présent mémoire.

10. Pâte à tartiner selon l'une quelconque des revendications précédentes, **caractérisée en ce qu'**aucune quantité substantielle de glycéride partiel n'est présente.

11. Procédé de fabrication d'une pâte à tartiner E/H comestible selon l'une quelconque des revendications précédentes comprenant les étapes suivantes consistant à :
a. préparer une phase aqueuse avec les ingrédients de phase aqueuse habituels et une phase grasse avec les ingrédients de phase grasse habituels,
b. mélanger lesdites quantités de phase aqueuse et de phase grasse de manière à obtenir une préémulsion comprenant de 25 à 60 % en poids, de préférence de 25 à 40 % en poids de phase grasse continue,
c. soumettre l'émulsion obtenue aux traitements de refroidissement et de travail habituels ayant pour résultat l'obtention d'une pâte à tartiner en émulsion E/H malléable,
**caractérisé en ce que** la composition de phase aqueuse comprend un épaississant dont le type et la concentration sont définis dans l'une quelconque des revendications précédentes et **en ce que** la phase aqueuse avant le mélange avec la phase grasse est chauffée à la température de viscosité maximale de l'épaississant et est ensuite mélangée à la phase grasse.

12. Procédé de fabrication d'une pâte à tartiner E/H comestible selon l'une quelconque des revendications 1 à 10, comprenant les étapes suivantes consistant à :
a. préparer une phase aqueuse avec les ingrédients de phase aqueuse habituels et une phase grasse avec les ingrédients de phase grasse habituels,
b. mélanger lesdites quantités de phase aqueuse et de phase grasse de manière à obtenir une préémulsion comprenant de 25 à 60 % en poids, de préférence de 25 à 40 % en poids de phase grasse dispersée,
c. soumettre l'émulsion obtenue aux traitements de refroidissement et de travail habituels ayant pour résultat le renversement de la préémulsion préparée dans l'étape b et finalement l'obtention d'une pâte à tartiner en émulsion E/H malléable,
**caractérisé en ce que** la composition de phase aqueuse comprend un épaississant dont le type et la concentration sont définis dans les revendications 1 à 10 et **en ce que** la phase aqueuse avant le mélange avec la phase grasse est chauffée à la température de viscosité maximale de l'épaississant et est ensuite mélangée à la phase grasse.

13. Procédé selon les revendications 11 ou 12, **caractérisé en ce que** l'épaississant est de l'amidon, de préférence un amidon prégélatinisé.

14. Procédé selon la revendication 13, **caractérisé en ce que** l'agent épaississant est un amidon natif.

15. Procédé selon la revendication 13, **caractérisé en ce que** l'amidon est choisi parmi le groupe composé d'amidon de pomme de terre, d'amidon de tapioca, d'amidon de maïs et d'amidon de maïs cireux.

16. Procédé selon les revendications 11 ou 12, **caractérisé en ce que** l'épaississant est choisi parmi le groupe composé de pectine, de cellulose et de dérivés de cellulose, de xanthane, de carraghénane et de galactomannanes.

17. Procédé selon les revendications 11 ou 12, **caractérisé en ce que** l'épaississant est une protéine, de préférence une protéine de lait ou une protéine de soja.

18. Procédé selon les revendications 11 ou 12, **caractérisé en ce que** la teneur en glycérides partiels dans la préémulsion est de 0 à 0, 1 % en poids, de préférence de 0 à 0,05 % en poids.

19. Procédé selon les revendications précédentes **caractérisé en ce qu'**aucune quantité substantielle de glycéride partiel n'est présente dans la préémulsion.

20. Procédé selon l'une quelconque des revendications 11 à 17 et 19, **caractérisé en ce que** seuls des ingrédients qualifiés de naturels sont utilisés.
